# EUROPEAN PATENT APPLICATION

(11) **EP 0 694 884 A2**
(43) Date of publication of application: **31.01.1996**
(21) Application number: 95111355.4
(22) Date of filing: 19.07.1995
(51) Int. Cl.: G07B 15/00

(54) **Interrogator system for moving-body transponders which permits dense interrogator positioning**

(30) Priority: 20.07.1994 JP 191057/94
(71) Applicant: NIPPONDENSO CO., LTD., Kariya-city Aichi-pref., 448 (JP)
(72) Inventor: Katoh, Taisei, Toyoake-city, Aichi-pref (JP)
(74) Representative: KUHNEN, WACKER & PARTNER

(57) **Abstract**

Prevention of communication errors due to interference of carrier waves of identical frequency in a moving-body identification system having a plurality of interrogators (X1, X2, X3...) is accomplished by providing several interrogators (X1, X2, X3...) in respective lanes. An oscillator (10) common to all interrogators (X1, X2, X3...) is provided, and a reference signal (S6) thereof is input to phase-locked loop circuits (11) of the interrogators (X1, X2, X3...), divided by an established fixed ratio, and formed into a carrier wave (S7) of predetermined frequency f1. The carrier wave (S7) is amplitude-shift modulated during a first time interval, and unmodulated carrier wave (S2) of the frequency f1 is output during a second time interval, and a transponder (Y1, Y2, Y3...) modulates and returns this carrier wave. Meanwhile, an interrogator (X3) employs a carrier wave of a frequency which is identical to that of another interrogator (X1) due to the phase-locked loop (11), and the transmission states during the first and second time intervals are identical with those of the second interrogator (X1). Because the carrier-wave frequencies match completely, beat communication error due to crosstalk of the carrier waves of the interrogator X1 and the interrogator X3 does not occur.

## Description

### CROSS-REFERENCE TO RELATED APPLICATION

This application is related to and claims priority from Japanese Patent Application No. Hei. 6-191057, incorporated herein by reference.

### BACKGROUND OF THE INVENTION

### 1. Field of the Invention

The present invention relates to an interrogator system having a interrogators which communicate with moving-body transponders. A part of an interrogator system according to the present invention may be disposed on an automobile, and can be applied in an automatic toll-collection system for vehicles at toll roadways or the like.

### 2. Description of Related Art

A system which disposes interrogators in each lane of a toll facility of a toll roadway and disposes transponders in vehicles is known as an automatic toll-collection system of, for example, a toll roadway. With this system, an interrogation signal which has undergone ASK (amplitude-shift keyed) modulation or PSK (phase-shift keyed) modulation of its carrier wave is transmitted by the interrogator, the interrogation signal is received by the transponder, a response signal is transmitted from the transponder to the interrogator in a format for answering the interrogation signal, and toll-collection for each vehicle is performed by a computer which controls the interrogator.

The following exists as one method of generating a carrier wave in a case of transmission of a response signal from a transponder to an interrogator. With this method, the interrogator modulates the carrier wave and inserts an unmodulated carrier wave into an interrogation signal using a time division technique, and the transponder receives this unmodulated carrier wave, performs ASK or PSK modulation on this unmodulated carrier wave, and re-transmits it to the interrogator. This method does not require providing an oscillator that generates carrier waves in the transponder, and consequently power consumption is low and this method is preferred for use in a moving body which cannot freely obtain a power source.

In the above system, however, because there are multiple travel lanes for vehicles, it is necessary to provide each travel lane with a respective interrogator. In this case, carrier waves of identical frequency obtained from the respective oscillators of two interrogators must be separated by a certain extent; otherwise, the carriers would interfere with one another. In this way, the bandwidth of frequency-division multiplexing is raised.

However, each interrogator employs its own respective oscillator, and so even if carrier waves of identical frequency are generated, it is quite unlikely that their phases or frequencies will exactly coincide; thus, the frequencies do not become completely identical, and a certain amount of disparity occurs between the frequencies due to constructive and destructive interference and beat effects. Thus, although the interrogators are separated by some extent, the two waves will interfere.

For this reason, if the first and second interrogators generate the interrogation signal at the same time, an interrogation signal transmitted from a first interrogator during interval A interferes with an interrogation signal transmitted from a second interrogator during the interval A, and the beat of the two carrier waves is detected when the transponder receives them. Additionally, a response signal transmitted from a first transponder during a time interval B interferes with a response signal transmitted from a second transponder during the time interval B, and in a case of reception by the first and second interrogators, the beat of the carrier waves is detected and generates crosstalk. In particular, a homodyne wave detection is normally performed by the interrogator during the reception of the signal, and so errors due to the beat are more prone to occur at the time of reception by the interrogator than at the time of reception by the transponder.

### SUMMARY OF THE INVENTION

The present invention is devised to solve the above-described problems, and an object thereof is to prevent the occurrence of abnormal communication due to interference of carrier waves of identical frequency.

To solve the above-described problems, a preferred embodiment of the present invention is a system having a plurality of interrogators which perform communication for a plurality of transponders disposed on moving bodies, comprising a first interrogator which repeats an operation of transmitting an interrogation signal with a modulated carrier wave of a predetermined frequency during a time interval A and transmitting an unmodulated carrier wave of a frequency thereof during a subsequent time interval B, as well as modulating at a transponder an unmodulated carrier wave thereof and receiving a signal transmitted as a response signal; a second interrogator disposed in a range in which interference with a carrier wave transmitted by the first interrogator may occur and which repeats an operation of transmitting an interrogation signal with a modulated carrier wave of a predetermined frequency during the time interval A and transmitting an unmodulated carrier wave of a frequency thereof during a subsequent time interval B, as well as modulating at a transponder an unmodulated carrier wave thereof and receiving a signal transmitted as a response signal; a common oscillator to produce a signal which becomes a reference for generation of the carrier waves for the first interrogator and the second interrogator; and phase-lock loop circuits disposed in the first interrogator and the second interrogator to divide a signal output from the oscillator by an equal ratio and generate the carrier waves of the predetermined frequency.

The first interrogator and the second interrogator employ carrier waves of identical frequency. These carrier waves are generated by employing respective phase-lock loop circuits to divide a reference signal generated from a common oscillator by an identical ratio. For this reason, the carrier waves used by the two interrogators are completely synchronized in frequency and phase. Accordingly, the frequency of the carrier wave of the interrogation signal transmitted from the first interrogator during the time interval A and the frequency of the carrier wave of the interrogation signal transmitted from the second interrogator during the time interval B match completely. The frequency of the unmodulated carrier wave transmitted from the first interrogator during the time interval B and the frequency of the unmodulated carrier wave transmitted from the second interrogator during the time interval B also match completely. As a result of this, communication error can be prevented because there is no contamination of the carrier waves into the dual sideband of the interrogation signal or the response signal, and no beat is produced. Also, because communication error is prevented in this way, it becomes possible to dispose the first interrogator and second interrogator in closer proximity.

### BRIEF DESCRIPTION OF THE DRAWINGS

Additional objects and advantages of the present invention will be more readily apparent from the following detailed description of preferred embodiments thereof when taken together with the accompanying drawings in which:
FIG. 1 is a block diagram indicating a structure of a system according to a specific embodiment of the present invention;
FIG. 2 is a circuit diagram indicating a structure of a transponder employed in the present system;
FIG. 3 is a waveform diagram indicating a method communication system;
FIGS. 4A and 4B are waveforms showing a modulated response signal output from a transponder; and
FIGS. 5A - 5C are waveforms showing how interrogators X1, X2, X3... transmit interrogation signal S1 and unmodulated carrier wave S2.

### DETAILED DESCRIPTION OF THE PRESENTLY PREFERRED EXEMPLARY EMBODIMENT

The present invention will be described hereinafter with reference to a presently preferred exemplary embodiment thereof.

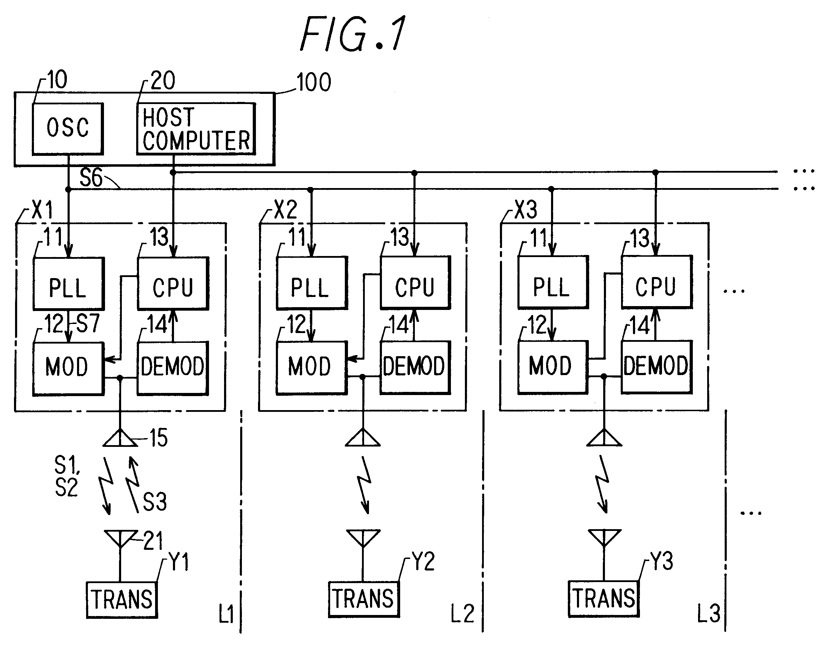

FIG. 1 is a block diagram indicating the structure of the present embodiment. A plurality of lanes L1, L2, L3... are formed in a toll facility of a toll roadway, and vehicles installed with respective transponders Y1, Y2, Y3... travel in the lanes. Several interrogators X1, X2, X3... are disposed as base stations in the respective lanes L1, L2, L3... The interrogators are of identical structure, and so the circuit structure of the interrogator X1 will be described as a representative device. The interrogator X1 includes a phase-locked loop circuit (hereinafter termed "PLL") 11, a modulator 12, a demodulator 14, a CPU 13, and an antenna 15. Each interrogator X1, X2, X3... is connected to a common interrogator controller 100. The interrogator controller 100 includes a host computer 20 which controls the transmission and receiving operations of each interrogator X1, X2, X3... and an oscillator 10 which transmits a common, standard signal S6 to all of the interrogators X1, X2, X3... The reference signal S6 is divided by an established fixed ratio, formed into a carrier wave S7 of a predetermined frequency f1, and provided to the modulator 12 by the PLL 11.

The CPU 13 outputs binary data for querying the transponder to the modulator 12 during interval A. The modulator 12 performs amplitude-shift modulation (ASK) of the carrier wave S7 on the basis of this binary data. This modulated signal is transmitted as a radio wave via the antenna 15 as an interrogation signal S1. This signal is a dual sideband (DSB) signal. In interval B that follows interval A, the CPU 13 sends a high-level signal to the modulator 12, an unmodulated carrier wave S2 having the frequency f1 is output from the modulator 12, and the signal is transmitted as a radio wave via the antenna 15.

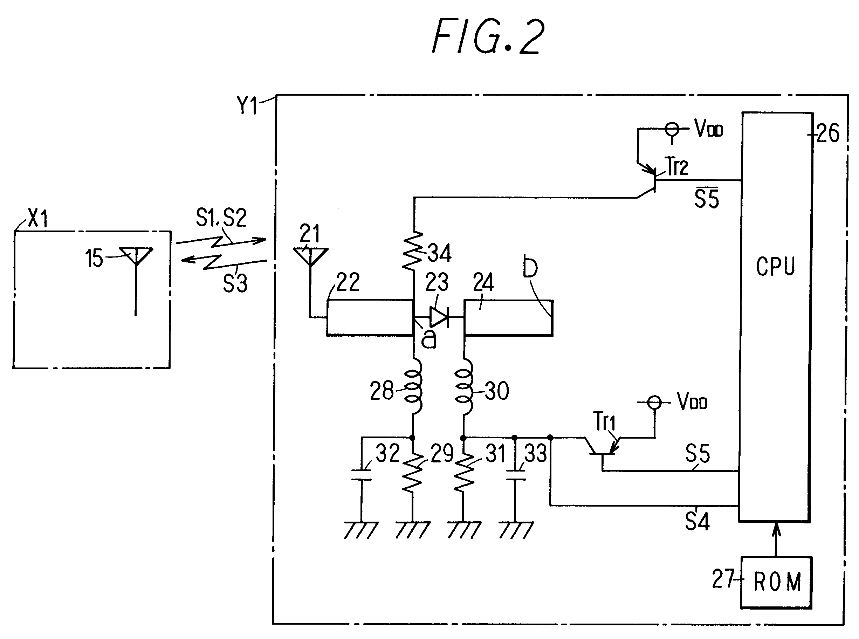

The transponders Y1, Y2, Y3... are all of identical structure, and so the structure of the transponder Y1 will be described as a representative unit. The structure of the transponder Y1 is shown in FIG. 2.

The transponder Y1 has an antenna 21 which receives the interrogation signal S1 and the unmodulated carrier wave S2 and transmits a response signal S3. The antenna 21 is connected to an anode of a diode 23 via a transmission path 22, the cathode of the diode 23 is connected to a first end of a transmission path 24, and the other end b of the transmission path 24 is open. The length of this transmission path 24 is established to be λ/4, where λ is the wavelength of the carrier wave. The anode and cathode of the diode 23 are connected to a coil 28 and a resistor 29, and a coil 30 and a resistor 31, respectively. The coil 28 and a capacitor 32 and the coil 30 and a capacitor 33 form a low-pass filter, and form an envelope detection--wave circuit together with the diode 23. The anode of the diode 23 is connected through a resistor 34 and transistor Tr2 to a power source V_{DD}.

In addition, power is applied to the connection between the coil 30 and resistor 31 by the power source V_{DD} via a transistor Tr1. The bases of the transistors Tr1 and Tr2 are connected to a CPU 26, and an identification code unique to the individual transponder is stored in a ROM 27 connected to the CPU 26.

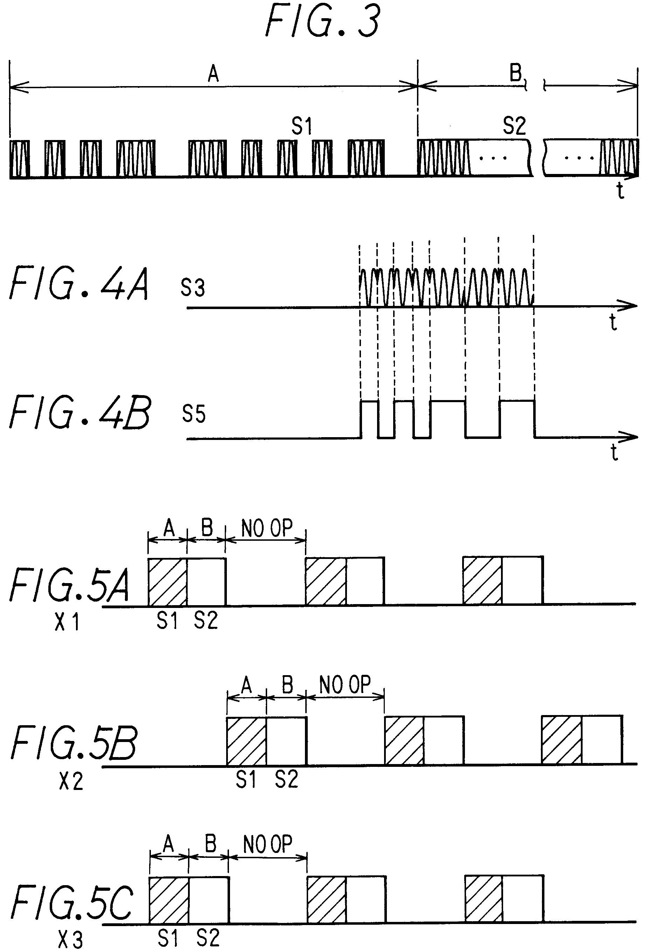

When the transponder Y1 is in a reset state, the transistors Tr1 and Tr2 are off. As a result, the cathode of the diode 23 is grounded through the resistor 31, and no bias voltage is applied to the diode 23. Accordingly, when the interrogation signal S1 indicated in FIG. 3 is received from the antenna 21 in the time interval A, the interrogation signal S1 is made into an envelope detection wave by a envelope detection-wave circuit implemented by the diode 23, coils 28 and 30 and capacitors 32 and 33 (i.e., the carrier wave is interrupted). A modulation signal S4 (binary signal) thereof is input to the CPU 26.

This modulation signal S4 is analyzed by CPU 26, and when it is determined to be an interrogation signal, response signal S3 (see FIG. 4A) which is the modulated version of the unmodulated carrier wave S2 is transmitted from the antenna 21 in interval B shown in FIG. 3. This procedure is as follows. The CPU 26 reads the individual identification code from the ROM 27, and generates a response signal S5 (shown in FIG. 4B) of binary data containing the identification code. On/off control of the transistors Tr1 and Tr2 is performed on the basis of the response signal S5. When the transistor Tr1 goes on and the transistor Tr2 goes off, power-source voltage V_{DD} is applied to the cathode of the diode 23, and the diode 23 is reverse-biased through the resistor 29. Consequently, the diode 23 goes into a nonconducting state and the unmodulated carrier wave S2 received by the antenna 21 is reflected by an input lead (first reflection point) a of the diode 23, and is reflected from the antenna 21 as a modulated signal S3.

Moreover, when the transistor Tr1 goes off and the transistor Tr2 goes on, the diode 23 goes into a forward-biased state. Accordingly, the unmodulated carrier wave S2 passes through the diode 23, propagates across the transmission path 24, and is reflected at an open end (second reflection point) b of the transmission path 24. This reflected wave passes through the diode 23 in reverse, propagates across the transmission path 22, and is transmitted from the antenna 21.

Because the effective wavelength of the transmission path 24 is λ/4, the phase differential of the wave reflected at the first reflection point a and the wave reflected at the second reflection point b becomes π radians at this time. As a result of this, the carrier wave is phase-modulated (PSK) by the response signal S5, as shown in FIG. 4A. This modulated response signal S3 is transmitted from the antenna 21 and received by the interrogator X1.

The response signal S3 received by the antenna 15 of the interrogator X1 is demodulated into a response signal of binary data by the demodulator 14 and read into the CPU 13, and the CPU 13 sends data to the host computer 20 to indicate that the vehicle on which the transponder Y1 is mounted has passed through the lane L1. Toll collection is managed by the host computer 20.

According to the foregoing system, the frequencies of the carrier waves of the interrogator X1 and the interrogator X3 are both f1, and the frequency of the carrier wave of the interrogator X2 which is most proximate to the interrogator X1 is a frequency f2 different from f1. Accordingly, as shown in FIGS. 5A - 5C, interrogators X1 and X3 which employ carrier waves of identical frequency transmit interrogation signal S1 and the unmodulated carrier wave S2 at the same time. Also, as shown in FIG. 3, interval A is the transmission interval of the interrogation signal S1 and the time interval B is the transmission interval of the unmodulated carrier wave S2 for both interrogator X1 and interrogator X3.

Interrogator X2, which uses a carrier wave having a frequency f2, transmits interrogation signal S1 and the unmodulated carrier wave S2 when interrogators X1 and X3 are at rest. Because interrogators X1 and X3 differ with interrogator X2 in their timing of transmitting interrogation signal S1 and unmodulated carrier wave S2, no interference occurs because the frequencies of their carrier waves differ. Moreover, the area in which X1 and X3 interfere is covered by the stronger signal from interrogator X2 which minimizes the effect of crosstalk of signals from those units. Therefore, transponders Y1, Y2, Y3... experience no beat frequency effects.

On the other hand, the frequencies of the carrier waves of the respective interrogation signals S1 of the interrogator X1 and the interrogator X3 match completely. Accordingly, no beat is detected by the transponders Y1 and Y3, and a received-data error does not occur. Furthermore, the interrogator X1 and the interrogator X3 go into a receiving state during interval B. Accordingly, the interrogator X1 goes into a state of receiving the unmodulated carrier wave S2 output by the interrogator X3, the response signal S3 output by the transponder Y1, and the output signal S3 output by the transponder Y3. The interrogator X3 also goes into a state of receiving the unmodulated carrier wave S2 output by the interrogator X1, the response signal S3 output by the transponder Y3, and the output signal S3 output by the transponder Y1.

However, because a carrier wave of divided phase-lock loop frequency f1 from the common oscillator 10 is employed by the respective PLL circuits 11 of the interrogators X1 and X3, the frequencies of the unmodulated carrier wave and the carrier waves of the respective response signals match completely, and so no beat is detected and consequently no data error occurs in the response signals which have been received.

Consequently, crosstalk in data communication between interrogators disposed adjacently can be prevented and accurate communication can be performed. Additionally, because accurate communication can be performed, the installation spacing of interrogators employing an identical frequency can be narrowed.

Although the present invention has been fully described in connection with the preferred embodiment thereof with reference to the accompanying drawings, it is to be noted that various changes and modifications will become apparent to those skilled in the art. Such changes and modifications are to be understood as being included within the scope of the present invention as defined by the appended claims.

## Claims

1. An interrogator system for a moving-body transponder, said system comprising:
a plurality of interrogators (X1, X2, X3...) which transmit interrogation signals (S1, S2) to moving-body transponders (Y1, Y2, Y3...); and
an oscillator (10), separate from said plurality of interrogators (X1, X2, X3...), generating a common signal (S6) that is used by said interrogators (X1, X2, X3...) as a standard for generating said interrogation signals (S1, S2).

2. An interrogator system for a moving-body transponder as in claim 1 wherein each of said plurality of interrogators (X1, X2, X3...) has a phase lock loop (11) which frequency divides said common signal (S6) generated by said oscillator to generate a carrier wave (S7) having a predetermined frequency.

3. An interrogator system for a moving-body transponder as claimed in claim 2 wherein each of said plurality of interrogators (X1, X2, X3...) modulates its respective carrier wave (S7) and transmits said modulated carrier wave (S1) to said moving-body transponders (Y1, Y2, Y3...) as an interrogation signal (S1) during a first interval, and transmits its respective carrier wave (S7) as an unmodullated carrier wave (S2) during a second interval.

4. An interrogator system for a moving-body transponder as claimed in claim 3 wherein after receiving said interrogation signal (S1) from an interrogator (X1, X2, X3...), said moving-body transponders (Y1, Y2, Y3...) send response signals (S3) which are modulated from said unmodullated carrier wave (S2) to said plurality of interrogators (X1, X2, X3...).

5. An interrogator system for a moving-body transponder as claimed in claim 3 wherein a portion of said plurality of interrogators (X1, X2, X3...) send interrogation signals (S1) and unmodullated carrier waves (S2) having a same timing and a same frequency.

6. An interrogator system for a moving-body transponder as claimed in claim 3 wherein among said plurality of interrogators (X1, X2, X3...), adjacent interrogators (X1, X2; X2, X3...) transmit interrogation signals (S1) and unmodullated carrier waves (S2) having different timing and different frequencies to said transponders (Y1, Y2, Y3...), and non-adjacent interrogators (X1, X3...) transmit interrogation signals (S1) and unmodullated carrier waves (S2) having said same timing and said same frequencies to said transponders (Y1, Y2, Y3...).

7. An interrogator system for a moving-body transponder as claimed in claim 3 wherein said plurality of interrogators (X1, X2, X3...) modulate said carrier wave (S7) having said predetermined frequency using one of an amplitude-shift keyed and a phase-shift keyed modulation techinque.

8. A method of interrogating moving-body transponders, said method comprising the steps of:
transmitting a common oscillator signal (S6) to a plurality of interrogators (X1, X2, X3...); and
generating, in each of said interrogators (X1, X2, X3), a respective carrier wave (S7) based on said common oscillator signal (S6).

9. The method of claim 8, said generating step comprising a step of frequency dividing said common oscillator signal (S6) in each of said interrogators )X1, X2, X3...) to produce said respective carrier wave (S7).

10. The method of claim 8, further comprising the steps of:
modulating and transmitting, in each of said interrogators (X1, X2, X3...), a respective carrier wave (S7) during a first time period to obtain said interrogator signal (S1); and
transmitting, in each of said interrogators (X1, X2, X3...), said respective carrier wave (S7) during a second time period.

11. The method of claim 10, further comprising the step of receiving a modulated carrier wave (S3) transmitted during said second time period.

12. An interrogator system for a moving-body transponder as claimed in claim 10 wherein a portion of said plurality of interrogators (X1, X2, X3...) send interrogation signals (S1) and unmodullated carrier waves (S2) having a same timing and a same frequency.

13. The method of claim 10, wherein:
said generating step comprises a step of generating respective carrier waves (S7) of different frequencies from adjacent interrogators (X1, X2; X2, X3...);
said modulating and transmitting step comprises a step of transmitting said respective interrogator signal (S1) at different times from adjacent interrogators (X1, X2, X3...); and
said transmitting step comprises a step of transmitting said respective carrier wave (S7) at different times from adjacent interrogators (X1, X2, X3...).

14. The method of claim 10, said modulating and transmitting step comprising a step of amplitude shift keyed modulating said carrier wave.

15. The method of claim 10, said modulating and transmitting step comprising a step of phase-shift keyed modulating said carrier wave.
